# EUROPEAN PATENT SPECIFICATION

(11) **EP 2 533 199 B1**
(45) Date of publication and mention of the grant of the patent: **13.08.2014**
(21) Application number: 11169581.3
(22) Date of filing: 10.06.2011
(51) Int. Cl.: G06T 7/00, G01B 11/24

(54) **Multi-view imaging system**
Bildgebungssystem mit Mehrfachansicht
Système d'imagerie à vues multiples

(43) Date of publication of application: 12.12.2012
(73) Proprietor: Universität des Saarlandes, 66123 Saarbrücken (DE)
(72) Inventor: Ihrke, Ivo, 66129 Bübingen (DE); Reshetouski, Ilya, 66125 Saarbrücken (DE); Manakov, Alkhazur, 66125 Saarbrücken (DE)
(74) Representative: Watterson, Peer Marten John

(56) References cited:
- DOUGLAS LANMAN ET AL: "Surround Structured Lighting for Full Object Scanning", 3-D DIGITAL IMAGING AND MODELING, 2007. 3DIM '07. SIXTH INTERNATIONAL CONFERENCE ON, IEEE, PISCATAWAY, NJ, USA, 1 August 2007 (2007-08-01), pages 107-116, XP031130986, ISBN: 978-0-7695-2939-4
- WAI L KHOO ET AL: "Reconstruction of a Three-Dimensional Tableau from a Single Realist Painting", VIRTUAL SYSTEMS AND MULTIMEDIA, 2009. VSMM '09. 15TH INTERNATIONAL CONFERENCE ON, IEEE, PISCATAWAY, NJ, USA, 9 September 2009 (2009-09-09), pages 9-14, XP031557715, ISBN: 978-0-7695-3790-0

## Description

### Technical field

The present invention relates to imaging systems, and in particular to multi-view imaging systems.

### Background of the invention

Photographic cameras are capable of recording a two-dimensional projection image of a three-dimensional scene onto a recording medium, such as film or a digital data storage medium. The position of the camera and the camera optics determine the viewpoint of the scene and define what will be depicted on a recorded image. If a camera records a single projection image from a fixed position, any object in the captured scene will only have one visible face on the recorded image: the face that is oriented towards the camera. Moreover, the depth information of the scene, i.e. the distance from any object in the scene to the camera itself, is lost by the projection operation. Using a single photographic image, it is therefore a priori not possible to capture the three-dimensional properties of any object.

Multi-view 3D reconstruction methods are able to extract three-dimensional information from a set of multiple two-dimensional projection images, each taken from a different viewpoint. In a known multi-view capturing system such as it has been described for example in "High Performance Imaging using Large Camera Arrays, ACM Trans. Graph. 24(3):765-776, 2005" by Wilburn et al., the multiple views are generated by taking a sequence of images from different viewpoints using a single camera, or by installing multiple cameras in a scene, which each record a picture simultaneously. These solutions are both time- and resource-consuming, and in the case of time sequential multi-view captures, the lighting conditions in the scene may change in between consecutive captures. This may render the captured views ill-suited for extracting the needed three-dimensional information. Indeed, if the lighting conditions change for different views, both the colour and texture information will not be uniformly captured in the multiple views, which will make a truthful rendering thereof impossible.

It has been suggested to use a simple mirroring setup in order to generate coherent multiple virtual views of a captured scene. It is for example known that by arranging two mirrors appropriately, one is able to generate at least four virtual or mirror images of an appropriately placed object. A known system, from K. Forbes, F. Nicolls, G. D. Jager, and A. Voigt, "Shape-from- Silhouette with two Mirrors and an Uncalibrated Camera" In Proc. ECCV, pages 165-178, 2006, exploits this property by arranging a camera, an object to be imaged, and two planar mirrors in such a way that an image recorded by the camera depicts the real object, as well as four additional virtual mirrored views of the object, corresponding to four virtual viewpoints. When using this system, care has to be taken to position the object such that there is no occlusion between the real object and its mirror images. This allows for partitioning the recorded image into several continuous areas, each corresponding to a view. Also, higher-order reflections, which occur when a virtual or mirrored image is itself the object of a mirror reflection, should not overlap. The known methods are unable to detect mutual occlusions between mirrored images. Therefore, while the use of mirrors allows a single camera to record multiple (virtual) views of the object in a single step, and thus using similar lighting conditions, known methods are only capable of exploiting a small fraction of the potentially available multi-view information.

Lanman, D. et al., "Surround Structured Lighting for Full Object Scanning", Proc. Sixth Intl. Conf. on 3-D Digital Imaging and Modeling (3DIM 2007), pp. 107 -116, 2007 discloses a system and method for acquiring a three dimensional surface model of an object which comprises illuminating an object from all sides and capturing an image of the object and two reflections of the object in a pair of planar mirrors. The system and method relies on projecting images onto the object with the use of a Fresnel lens.

Khoo, Wai L. et al., "Reconstruction of a Three-Dimensional Tableau from a Single Realist Painting", Proc. 15'th Intl. Conf. on Virtual Systems and Multimedia (VSMM'09), pp. 9 -14, 2009 discloses reconstructing a tableau depicted in a painting based on reflections of the tableau in mirrors also depicted in the painting.

### Technical problem to be solved

It is therefore an object of the present invention to provide a method and device for generating massively multi-view information of an object using a single camera, which overcomes at least some of the disadvantages of the prior art.

More specifically, it is an object of the present invention to provide a method and a device for identifying multiple virtual views of an object in a single image, which is taken by images sensing means in a generic mirroring setup.

### Summary of the invention

1. According to a first aspect of the present invention, there is provided method of mapping each one of a plurality of pixels in a single (001) image to one of multiple views of an object (010) in the image, the image being taken by image sensing means (030), the image sensing means comprising at least one sensor element (031) capable of recording a plurality of image pixels and optical means (032) defining a field of view (033), wherein said field of view comprises a mirroring system (040) having one or more mirrors, each mirror providing a reflection of the object, each reflection corresponding to a virtual view of the object, the method comprising the steps of:
   a. providing (1000) parameters that are related to the image sensing means (030);
   b. providing (1001) a computational model of the mirroring system (040); characterised in that the method further comprises:
   c. providing (1002) a computational model of the object's (010) three dimensional characteristics;
   d. computing (1003), for each image pixel, a mirroring sequence for said computational model, the mirroring sequence comprising an ordered M-tuple describing a sequence of said mirrors reflecting a ray (051), having an origin at the position of the sensor element (031) that captured said image pixel and intersecting the object (010); and
   e. using the computed mirroring sequence to map each image pixel to a virtual view or to a base chamber, wherein the base chamber corresponds to a ray originating in a non-mirrored scene.

Preferably, the image sensing means may comprise a plurality of sensor elements arranged in two dimensions.

The mirroring system may preferably comprise at least one planar mirroring surface.

The computational model of the mirroring system may preferably be computed from at least one provided reference image of a reference object that is located in said field of view.

It is preferred that the at least one reference image of a reference object may be taken by the image sensing means, and that it may comprise at least one virtual view of the reference object.

Preferably, the reference object may have a planar structure.

More preferably, the reference object may comprise a checkerboard pattern.

The planar reference object may preferably be arranged so that it is not substantially orthogonal to any of the planar mirroring surfaces of said mirroring system.

Preferably, the computation of the computational model of the mirroring system may comprise the steps of
- estimating the parameters describing the geometry of the mirrors in a coordinate system related to the image sensing means
- estimating the parameters describing the geometry of the mirrors in a coordinate system related to the reference object
- estimating rotation and translation matrices for converting coordinates between the coordinate system related to the image sensor and the coordinate system related to the reference object.

More preferably, during the computation of the computational model of the mirroring system, the representations of first order reflections of the reference object in the at least one reference image may be used.

The representations of higher order reflections of the reference object in the at least one reference image may preferably be used in these computations.

It is preferred that the computational model of the object's three-dimensional characteristics may be computed from at least one provided silhouette image of the object.

It is further preferred that the multiple silhouette images corresponding to multiple views of the object taken from multiple viewpoints may be provided. It is even more preferred that said multiple views might be comprised in a single silhouette image.

The silhouette image, comprising multiple virtual silhouette views of the object taken from different viewpoints, may be obtained by:
- taking, using said image sensor means, a first picture of said field of view, which does not include said object
- taking, using said image sensor means, a second picture of said field of view, which does include said object.
- computing the difference between the two images.

Preferably, the computation of the computational model of the object's three-dimensional characteristics may comprise the steps of
- computing, based on the provided computational model of the mirroring system, for each image pixel representing background information in said silhouette image, the mirroring sequence in said computational model for said silhouette image pixel,
- using the computed mirroring sequence to estimate the hull that comprises the object. The method may further comprise identifying a projection direction to be used by a projecting means (430) for projecting a light beam onto an object (410), the projecting means comprising optical means (432) defining a field of projection (433), wherein said field of projection comprises a mirroring system (440) having at least one mirror, the method comprising the steps of
   a. providing (2000) parameters that are related to the projecting means;
   b. using the computed mirroring sequence to map each point in the field of projection to a projection direction, wherein each mirroring sequence corresponds to a projection direction (2004).

According to a further aspect of the present invention, a device for carrying out the outlined method is provided, the device comprising image sensing means, which comprise at least one sensor element capable of recording a plurality of image pixels and optical means defining a field of view. The device further comprises a mirroring system having at least one mirror, wherein the mirror system is arranged to be located in the field of view. The device further comprises computing means that are capable of:
- providing a computational model of the mirroring system,
- providing the relative position of the image sensing means with respect to the mirroring system,
- providing a computational model of the object's three dimensional characteristics,
- computing, based on the provided computational model, for each image pixel, the mirroring sequence in said computational model for said image pixel, and
- using the computed mirroring sequences to map each image pixel to a virtual view, as each mirroring sequence corresponds to a virtual view.

According to a further aspect of the present invention, a computer for carrying out the described method is provided.

According to another aspect of the present invention, a computer program for carrying out the described method is provided. According to yet another aspect of the present invention, there are provided storage means comprising the computer program.

The method and device according to one aspect of the present invention allow the identification of the origin of each ray of light that was captured by the imaging sensor, as well as the mirroring sequence that each ray was subjected to, considering that a pixel in the captured image corresponds to a captured ray.

The method and device according to another aspect of the present invention allow the identification of a projection direction that is to be used by a projector that is to project a light beam onto a specific point on an object, as well as the mirroring sequence that the projected ray or beam is subjected to.

The present invention provides a framework for dealing with generic systems of mirrors imaged by a projective camera. Using the present invention, such imaging systems can be used to obtain dense multi-view data that is calibrated both geometrically and photometrically. The output of the techniques according to the present invention is directly usable in standard multi-view reconstruction algorithms.

All multi-view information can be extracted from a single image, enabling dynamic scene recording. Due to the wide range of views achievable with such a system, it is possible to image every surface point from a large number of directions. The setup is inexpensive when compared to multi-video acquisition systems and makes better use of the available sensor area. Additional advantages include perfect synchronization and common radiometric and colorimetric properties for all views.

The described labelling algorithm and device according to the present invention are directly applicable to projection applications, in which a projector selectively illuminates different regions of a three-dimensional object.

### List of figures

Several embodiments of the present invention are illustrated by way of figures, which do not limit the scope of the invention, wherein:
Fig 1a illustrates a device according to the present invention.
Fig 1b illustrates an image on which the method according to the present invention operates.
Fig 2a and 2b illustrate a particular aspect of a preferred embodiment of the method according to the present invention.
Fig 3 illustrates a further aspect of a preferred embodiment of the method according to the present invention.
Fig 4 illustrates different viewpoints of an object, which are identified using a preferred embodiment of the method according to the present invention.
Fig 5 illustrates a preferred embodiment of a device according to the present invention.
Fig 6 illustrates a further preferred embodiment of a device according to the present invention.
Fig 7 illustrates a flow chart outlining different steps of a preferred embodiment of the method according to the present invention, which are implemented in a preferred embodiment of a device according to the present invention.
Fig 8 shows results obtained using a preferred method and device according to the present invention.
Fig 9 illustrates a preferred embodiment of a device according to the present invention, comprising projecting means.
Fig 10 shows results obtained using a preferred method and device according to the present invention, comprising projecting means.

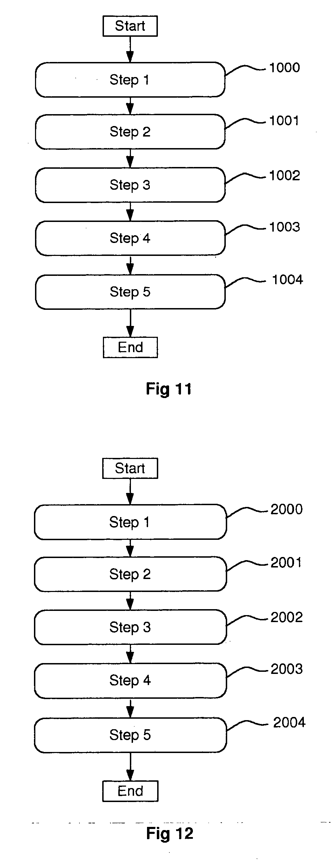

Fig 11 provides a flowchart illustrating a first method according to the present invention.
Fig 12 provides a flowchart illustrating a second method according to the present invention.

### Detailed description

This section describes the invention in further detail based on preferred embodiments and on the figures.

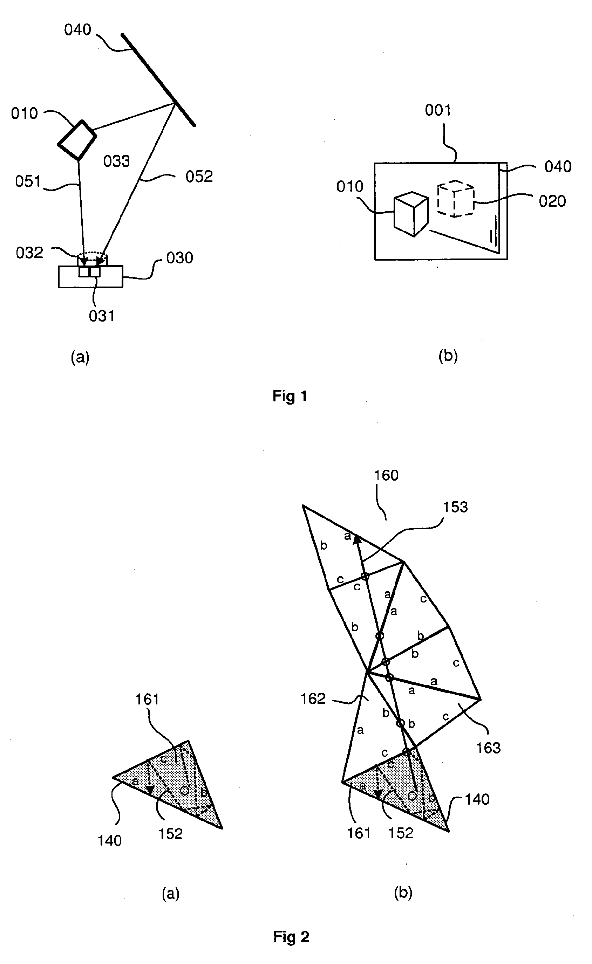

As shown in Fig 1 a and Fig 1b, the present invention applies to images 001, which depict an object 010 and at least one mirrored or virtual view 020 of the same object. In order to capture such an image 001, a camera 030, having image sensing means 031 and camera optics 032 defining its field of view 033, needs to be set up so that both the real object 010 and at least one mirroring surface 040 are visible in the field of view. It is preferred that the image sensor elements of the camera are arranged along two dimensions, defining a grid. Moreover, the object and the mirroring surface 040 need to be arranged so that the object's at least one mirror image, or virtual view 020, is at least partially visible in the camera's field of view 033. Each point or pixel in the captured image corresponds to either the real view of the scene comprising the object or to a virtual view of the scene comprising the object. This correspondence depends on whether the captured ray of light was deflected by the mirroring surface 040, as shown by ray 052, or not, as shown by ray 051, prior to hitting the image sensor 031. Therefore, there exists a labelling that maps each image pixel uniquely to one virtual view.

If this labelling is known, all the information contained in the described image, including any occlusions between virtual views, can be attributed to specific virtual viewpoints of a single imaged object. This allows to use massively multi-view information, captured in identical lighting conditions by a single imaging sensor, to be used for example in multi-view 3D reconstruction algorithms. Another application may be the capture of the texture of the imaged object in three-dimensional lighting conditions. The method and device according to the present invention allow to generate this labelling.

According to the present invention, in a first calibration step, parameters that are related to the image sensing means or camera need to be provided. These camera parameters may be measured by known methods, such as the method implemented by J.-Y. Bouguet in his Camera Calibration Toolbox for Matlab™, 2005. The camera parameters include the location and coordinates of the central point of the camera, the distortion induced by the camera optics, and the focal length of the setup. The camera parameters allow for associating each pixel in the image with a coordinate tuple with respect to the central point of the camera.

In a second calibration step, a computational model of the mirroring system 040 is provided. The computational model of the mirroring system includes a set of parameters that define the mirroring surfaces in a given coordinate system. In the case of planar mirrors, these parameters are the planar equations describing the mirror planes. Furthermore, the coordinates of the location of the camera in the same coordinate system, and the camera position with respect to the mirroring surfaces need to be provided. The computational model may be available a priori, or it may be computed using a series of calibration images, as will be described below in a preferred embodiment.

Depending on the application that is being considered, the three dimensional characteristics of the imaged object may or may not be available a priori. For example, when the texture of an object is to be captured under realistic lighting conditions from multiple viewpoints, the three-dimensional characteristics of that object will typically be available a priori. In some applications, the three dimensional characteristics of the object may however be unknown a priori. In that case, an approximation of its three dimensional visual hull, i.e. a hull which contains the object, may be computed according to a further aspect of the present invention, which will be described below.

Furthermore, the coordinates of the location of the object with respect to the mirroring surfaces need to be provided.

If the camera parameters, the positions of the mirroring surfaces that have generated the virtual views of the object that are visible on the image, including the camera and mirror positions, as well as the imaged object's three dimensional characteristics and its spatial position with respect to both the camera and the mirroring system are known, the method according to the present invention proceeds as follows.

### Labelling algorithm

A ray that is captured by an imaging sensor may have originated in the non-mirrored scene, which we will call the 'base chamber', and have hit the image sensor in a straight line, as illustrated for example by ray 051 in Fig 1a.

A different ray 052 that is captured by an imaging sensor may however have been reflected at least once by at least one mirroring surface 040, prior to hitting the imaging sensor. Such a ray could not have been captured by the image sensor if the at least one mirroring surface would not have been present. It corresponds to a virtual view of the base chamber.

Fig 2a shows an illustrative example of this concept in a two-dimensional case, wherein the base chamber 161 is enclosed by three planar mirrors a, b and c forming a mirroring system 140. The example extends straightforwardly to the three dimensional case and to the case of non-planar mirroring surfaces. We consider that a pinhole camera with projective centre O is provided in the base chamber 161. The ray 152 is reflected off the mirrors in a particular order L_{M} = (c,b,a,b,a,c,a,...) for a particular number M of reflections. Here, L_{M} is an ordered M-tuple describing the mirror sequence that the ray intersects. It is indicative of the light path taken by the ray inside the mirroring system. As the geometry of the base chamber 161 is known, it is possible to compute the mirroring sequence by tracing back the path taken by the ray one reflection at a time. It is however also possible to "unfold" this light path by mirroring the base chamber 161 instead of the ray 152, creating a sequence of mirror chambers along the straightened ray 153, as shown in Fig 2b. Each chamber that is attained by the ray can be identified by the series of intersections between the straightened ray and the boundaries of the virtual chambers.

Each virtual mirror chamber that is unfolded in this way corresponds to a unique camera view, as it can be observed from the camera centre O. The set of virtual mirror chambers defines the unfolded mirror space 160. Any point in the unfolded mirror space can be associated uniquely with a point in the base chamber 161 through a series of reflections, the opposite however is not true.

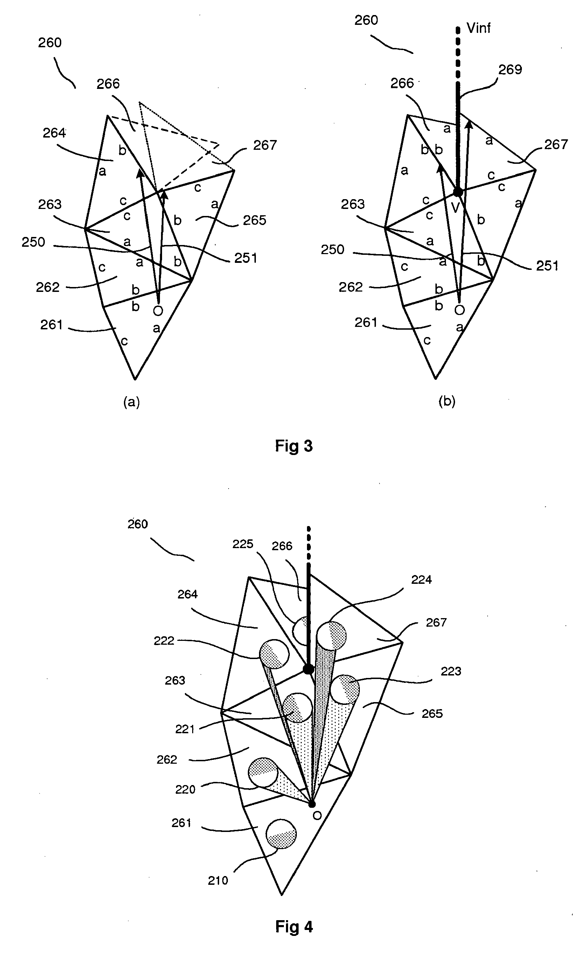

As shown in the example of Fig 3a, in general, two neighbouring light rays 250 and 251, traverse the system in a similar manner, i.e. L_{M} = L'_{M} for some reflection count M. This is the reason for obtaining recognizable virtual views in systems of planar mirrors. However, as soon as the two rays hit different mirrors at some reflection count K>M, the sequence L'_{K} for ray 251 will no longer be equal to the sequence L_{K} for ray 250. This situation is more precisely depicted in Fig 3b. The two neighbouring rays 250 and 251 are incident on two different mirrors after having traversed the base chamber 261 and two mirror chambers 262, 263, in the same order, i.e. L₂ = L'₂ = (b,a), but L₃ = (b,a,c) ≠(b,a,b) = L'₃.

Depending on the mirroring system's geometry, not all virtual views will represent the base chamber in its entirety. This situation is for example illustrated by the space 260 as unfolded for three reflections along rays 250 and 251 respectively in Fig 3a. All rays in unfolded mirror space are straight lines originating in point O. Ray 250, for example follows the mirroring sequence b,a,c,b, while ray 251 follows the mirroring sequence b,a,b,c. At the next step of reflection, the virtual chamber through which 250 passes is chamber 266, while ray 251 will pass into chamber 267. The limiting ray in this case is the ray that passes through both points 0 and V. Rays that are in the immediate vicinity of this limiting ray, and to the left of it, pass through the virtual chamber 266. However, rays that are in the immediate vicinity of this limiting ray, and to the right of it, pass through the virtual chamber 267. The segment [V, V_{inf}[ defines a line of discontinuity in the unfolded mirror space, and both virtual chambers 266, 267 correspond to views of the base chamber that are only partially visible from the camera's position O.

Using the described approach, an unfolded mirror space representation can be computed and stored for a given camera position and mirroring setup. It is sufficient to unfold the mirror space along each ray that corresponds to an image pixel that has been captured by the camera. As shown in Fig 4, if an object 210 is put into the base chamber 261, it may be represented appropriately in unfolded mirror space 260, where it is copied into each virtual chamber, corresponding to the virtual views that the corresponding mirroring system generates.

The cones in Fig 4 encode different viewpoints of the object. The views 210, 220, 221 and 223 are fully visible to the camera, views 222 and 224 are partially visible and partly occluded by other views, while the partial view 225 is fully occluded. Clearly, one can identify the origin of each pixel in the image by associating the corresponding virtual chamber to it, which, in turn is identified by the sequence of mirror reflections.

The cones corresponding to the virtual views of the object can only be computed when the boundaries of the object, and therefore its shape, is known. In many cases however, this information is not available a priori.

Therefore, according to one aspect of the present invention, an approximation of the three dimensional shape of an object can be computed. The computational model representing this approximation is called 'visual hull' and corresponds to a hull, which encloses the real object. The visual hull may be used as a geometric proxy for the real object in the method that has been described above.

### Extracting a computational model of the three-dimensional shape of an object

In order to compute the visual hull of an arbitrarily shaped object, a first and a second image are taken using a camera. The camera, having image sensing means and camera optics defining its field of view, needs to be set up so that least one mirroring surface is visible in the field of view. The first image captures only the background information, without the object. The second image, taken from the same point of view, should include the object that is to be approximated. The object and the mirroring surface need to be arranged so that the object's at least one mirror image, or virtual view, is at least partially visible in the camera's field of view. The accuracy of the computed visual hull of the object increases with the availability of non-overlapping virtual views. The object and its mirrored representations should be separable from the background.

In a preferred embodiment, a planar multi-view silhouette image is obtained by subtracting the first background image from the second image containing both the background information and the mirrored virtual views of the object. It can for example be considered that the pixels that represent the background in the silhouette image are black, while object pixels are white. If the object and its mirrored representations are surrounded by a known background, which is preferably of uniform colour, it is possible to extract the multi-view silhouette image from a single image.

By computing the unfolded mirror space for this mirroring setup, a sequence of reflections is obtained for each ray that has generated a pixel in the silhouette image. By folding back such a ray into the base chamber, one obtains a representation of the trajectory of each ray, as shown for example in Fig 2a.

In a first step, it is considered that the object can be located anywhere in the base chamber, or, conversely, that the object occupies the base chamber in its entirety, in analogy to a solid block. It is important to note that a black pixel in the multi-view silhouette image corresponds to a ray, which, when folded back into the base chamber, corresponds to a trajectory that does not intersect the object. By applying this reasoning to all black pixels in the multi-view silhouette image, it is therefore possible to approximate the location and the boundaries of the object in the base chamber. By analogy, this corresponds to carving out, pixel by pixel, the hull of the object from the solid block representing the entire base chamber. The precision of this algorithm may be increased with the availability of an increasing number of different virtual views of the object.

In a preferred embodiment in three dimensions, the space carving scheme may be implemented as a voxel-based algorithm, The voxel grid is defined in the base chamber. To account for diverging rays, a subsampling scheme for the pixels in the camera view may be implemented. To achieve the most efficient use of the available resolution, the size of the bounding box of the voxel grid is chosen to enclose the object tightly.

### Detailed description of a preferred embodiment

A particularly preferred embodiment according to the present invention is described, without limiting the scope of the invention to this specific embodiment.

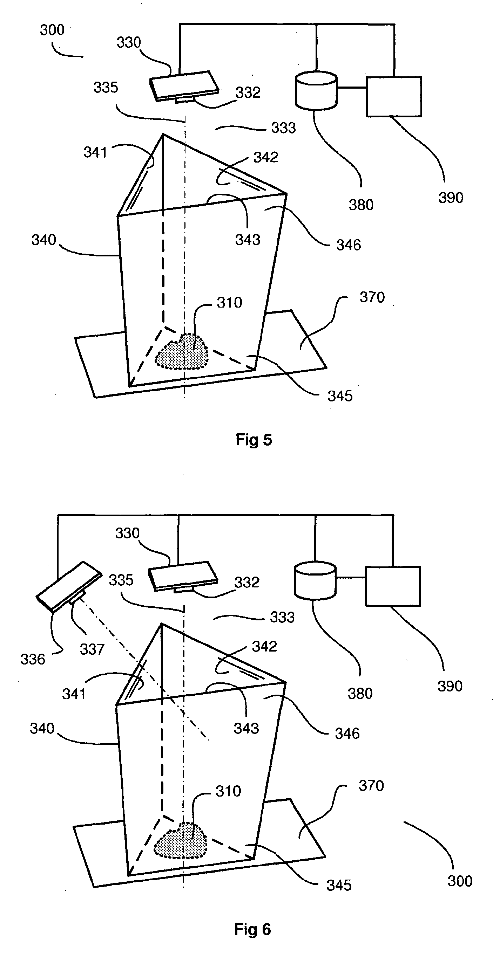

As illustrated in Fig 5, the setup 300 includes an imaging sensor or camera 330 having optical means 332 defining a field of view 333. The camera is capable of capturing and storing image data. Preferably, the image data is stored on storage means 380, such as a hard disk, solid state memory or another similar device. Computing means 390 are configured so that they can access the image data on the storage means 380. Moreover, the computing means are configured to compute the above described labelling algorithm based on the image data, the camera parameters, and he computational models of both the mirroring setup 340 and the imaged object 310.

It is preferred that the mirroring system 340 comprises three planar mirrors 341, 342, 343, which are arranged so as to enclose a tubular space of triangular subsection. The tubular space defines the base chamber of the mirroring system. Preferably, the longitudinal axis of the tubular space is arranged to be substantially parallel to the main axis 335 of the image sensing means 330. It is further preferred that the proximal end 346 of the tubular space has a larger cross-section than its distal end 345. This tapered shape implies that none of the mirroring surfaces is arranged in parallel with the main axis 335 of the image sensing means.

The triangular section of the tubular space can be shown to be the optimal shape in order to fit as many virtual views as possible into a given depth range. This is preferable as in practice all cameras provide a finite aperture, and there is only a certain depth range where blur-free virtual views can be acquired. The same object-containing image may be used for both the visual hull computation and the labelling algorithm, which will both use the same unfolded mirror space representation, which only needs to be computed once. Alternatively, ray-tracing may be performed on the computational model of the mirroring setup, without computing the unfolded mirror space representation. Both the visual hull computation and the labelling algorithm may in such a preferred case operate on the same silhouette images, as illustrated by the flowchart in Fig 6.

The object 310 that is to be captured using the multi-view setup 300 is entered into the base chamber through the distal aperture 345 of the base chamber, by use of object holding means forming a ground plane 370.

The camera may for example be of the Canon^{™} Mark II type, equipped with a Canon^{™} EF14mm f/2.8 USM lens. The smallest aperture of this lens is f/22. It may be preferably set to f/20 in order to limit diffraction effects.

### Extracting a computational model of camera parameters and of the mirroring setup

The parameters of the camera are calibrated using a number of checkerboard images using Zhang's method as implemented in Bouguet's calibration toolbox. In order to compute the model of the mirroring setup, a planar checkerboard pattern is placed into the mirroring setup and captured by the camera at different heights above the ground plane. The orientation of the checkerboard pattern should be substantially perpendicular to the main axis of the camera. This measure helps to keep the calibration consistent in the whole acquisition volume. As the triangular mirroring tube has a smaller cross-section at its distal end than at its proximal end, this arrangement makes sure that the reflections of the lines in the checkerboard pattern, as observed by the camera, are not all collinear to the real lines in the checkerboard pattern. Radial distortion is removed from the images and the real image as well as the first-order reflections of the checkerboard, are identified.

Plane equations are then computed using the known camera parameters, and initial guesses for the mirror planes are formed. This initial calibration is used to predict the position of the second-order reflections of the checkerboard pattern in the multi view images. Matching these to the extracted corners, the reprojection error can be minimized. Then, in a similar manner, third- and higher-order reflections may be added. In a preferred embodiment, the checkerboards are typically well visible up to the sixth reflection order and all of this information is used in a final bundle adjustment of all parameters, camera intrinsics, extrinsics and mirror plane parameters. The resulting reprojection error is typically within 1.2 pixels. A detailed description of the different steps involved in the extraction of the computational model of the mirroring setup is given for the sake of completeness here below for the case of 3 planar mirrors.

### Estimating the positions of the mirrors:

Input: The images of a checker-board plane, placed inside the base chamber at different heights from the ground plane;
Output:
   1. The positions of the mirrors with respect to the camera, i.e. equations of the mirror-planes in the camera coordinate system (a coordinate system related to the camera) and in the coordinate system related to the real (not mirrored) checkerboard plane closest to the bottom side of the mirrors;
   2. Rotation and translation matrices, defining the conversion between the coordinate system related to the real checkerboard closest to the bottom side of the mirrors and the coordinate system related to the camera.

### Step 1: Initial estimation of the mirror positions

Input: The images of a checkerboard plane, placed inside of the mirroring system at different heights from the ground plane (say N photos)
Perform: For every j^{th}, j = 0 ... N-1 substeps number 1.1 and 1.3 are performed
Output:
   1. Roughly estimated mirror positions with respect to the camera i.e. normal unit vector nᵢ and a point Dᵢ in a plane for every of the mirror-planes in the camera coordinate system.
   2. Rotation and translation matrices, defining the conversion between the coordinate system related to the real checkerboard closest to the bottom side of the mirrors and the coordinate system related to the camera.

### Substep 1.1: Corner extraction

Input: J"' image of the checkerboard plane, placed inside of the system at a certain distance from the bottom side of the mirrors;
Perform: Corner extraction method, for example the algorithm implemented by Bouguet in the MATLAB^{™} calibration toolbox. The corners extraction procedure is repeated for every real checkerboard (i = 0) and mirrored version of the checkerboard. Mirrored versions are obtained by mirroring the real one against i^{lh} mirror i = {1, 2, 3}.
Output: Coordinates of the corners (the coordinates of the pixels corresponding to the corner) of the i^{lh} checkerboard in the coordinate system related to the image (further simply "image coordinate system"). Suppose L corners are extracted.

### Substep 1.2: Estimation of rotation and translation matrices

Input: Extracted corners for i^{lh} checkerboard on the j^{th} photo; Intrinsic parameters of the camera.
Perform: Corner detection algorithm, e.g. the algorithm implemented in MATLAB^{™} calibration toolbox.
Output: Rotation and translation matrices for converting between coordinates of the coordinate system related to the i^{th} checkerboard corresponding to the j^{th} photo and coordinate system related to the camera.

### Substep 1.3: Estimating a point on the mirror-plane

Input:
   1. Three-dimensional coordinates of corners on the i^{th} checkerboard, in a coordinate system related to the checkerboard (further simply "checkerboard coordinate system") for every j^{h} photo, i = 0...3, j = 0...N-1;
   2. Rotation and translation matrices for every i^{th} checkerboard corresponding to j^{th} photo, i = 0 ... 3, j = 0 ...N-1;
Perform: For every j^{th} photo, i = 0 ...N-1 and for every i^{lh} checkerboard, i = 0 ... 3 step number 1.3.1 is performed
Output: A point (3D coordinates in the camera coordinate system) in every mirror plane.

### Substep 1.3.1: Computing the coordinates of the corners in camera coordinate system

Input:
   1. Three-dimensional coordinates of corners on the i^{th} checkerboard, in a coordinate system related to the checkerboard (further simply "checkerboard coordinate system") for every j^{th} photo;
   2. Rotation (R_{i,j}) and translation (Tᵢ,ⱼ) matrices for every i^{th} checkerboard corresponding to j^{th} photo;
Perform: Convert coordinates of every corner x_{i,j,k} (where k - number of the corner) by using the formula R_{i,j}* x_{i,j,k} + T_{i,j}
Output: Three-dimensional coordinates X_{i,j,k} of the checkerboard corners in camera coordinate system;

### Substep 1.4: Computing the point-cloud for every mirror and photo

Input: Coordinates of the corners given in the camera coordinate system, X_{i,j,k}, i = 0 ... 3, j = 0 ... N-1, k = 0 ... L - 1
Perform: For every pair (X_{i,j,k}, X_{0,j,k}) where i = 1 ... 3, j = 0 ...N-1, k = 0 ... L - 1 compute P_{i,j,k} = (X_{¡,j,k}- X_{0,i,k}) / 2;
Output: Three-dimensional camera system coordinates of points P_{i,j,k}, i = 1 ... 3, j = 0 ... N-1, k = 0 ... L - 1;
   The points are the middles of the segments. Every segment connects a corner on a real checkerboard and the corresponding reflected corner.

### Substep 1.5: Computing a mean-point of every point cloud

Input: Three-dimensional camera system coordinates of points P_{i,j,k,} i= 1 ... 3, j = 0 ... N-1, k = 0 ... L - 1;
Perform For every i = 1 ... 3 and j = 1 ... N - 1 compute a mean-point M_{i,j} = (1/L) * (P_{i,j,0} + P_{i,j,1} + ... + P_{i,j,L-2} + P_{i,j,L-1})
Output: Three-dimensional points M_{i,j}, i = 1 ... 3, j = 0 ...N-1;

### Substep 1.6: Computing a point in the mirror plane

Input: Three-dimensional points M_{i,j}, i = 1 ... 3, j = 0 ...N-1;
Perform: Compute Tᵢ = (1/N) * (M_{i,0} + M_{i,1} + ... + M_{i,N-2} + M_{i,N-1});
Output: Three-dimensional points in a mirror-plane T₁, T₂, T₃ given in the camera coordinate system.

### Substep 1.7: Estimating normal vectors of the mirror-planes

Input: Rotation matrix R_{i,j}, i = 0 ... 3, j = 0 ...N-1;
Perform:
   1. Compute a vector in the mirror - plane pᵢ = c₀ + c;, i = 1 ... 3;
   2. nᵢ = [[cᵢ, c₀], pᵢ], where i = 1 ... 3;
Output: Normal unit vectors for mirror-planes, nᵢ, i = 1 ... 3. cᵢ are the normal to the checkerboard plane presented in camera coordinate system, i = 0 ... 3.

### Step 2: Extracting the checkerboard corners for higher order reflections

Input:
   1. Mirror-planes Mᵢ = (nᵢ,Tᵢ), where i = 1 ... 3;
   2. K - camera intrinsic parameters matrix;
   3. X_{0,j,k}- points obtained during the step 2.1.3.1;
Output:
   1. Three-dimensional points X_{i,j,k}, corresponding to higher order reflections of X_{0,i,k}, i = 1 ... 3, j = 0 ...N-1, k = 0 ... L - 1;
   2. Two-dimensional coordinates of the points U_{i,j,k}- X_{i,j,k} projected on the image plane;

### Substep 2.1: Obtaining reflected points

Input:
   1. Mirror-planes Mi = (nᵢ,Tᵢ), where i = 1 ... 3.
   2. X_{0,j,k}- points obtained during the step 2.1.3.1, j = 0 ... N-1, k = 0 ... L- 1;
   3. K matrix - a matrix of intrinsic parameters of the camera obtained on the first step.
Perform:
   1. Obtain the reflection matrix Dᵢ correspondent to every mirror Mᵢ.
   2. Compute Q_{j,k} by multiplying X_{0,j,k} with Dᵢ in an appropriate order.
   3. Project Q_{j,k} to the image plane using K matrix.
Output:
   1. Q_{j,k}- three-dimensional coordinates of the points, obtained by mirroring X_{0,j,k}, j = 0 ... N-1, k = 0 ... L - 1;
   2. V_{j,k}- Q_{j,k} projected to the image plane, j = 0 ...N-1, k = 0 ... L - 1;.

### Substep 2.2: Refining corners

Input:
   1. V_{j,k}- two-dimensional coordinates obtained during previous step.
   2. w - window size, a size of the region around, where the search (refinement) of the true-corner will be performed, given in pixels.
Perform: Every entry of the V_{j,k} considered as a center of the region (2w + 1)x(2w + 1) where the search of the true-corner will be performed. There could be used any algorithm for corner detection within a predefined region.
Output: U_{j,k} - refined coordinates of the corners on the checkerboard.

### Substep 2.3 Refining mirror-planes

Input:
   1. Vⱼ,k- two-dimensional coordinates obtained on the step 2.2.1.
   2. U_{j,k} - refined coordinates of the corners
   3. Mirror-planes Mᵢ = (nᵢ,Tᵢ), where i = 1 ... 3.
   4. Rotation and translation matrices mentioned on the step 2.1.2 taken for the real checkerboard in the photo number 0.
   5. K matrix - a matrix of intrinsic parameters of the camera obtained on the first step.
Perform: It is noted that V_{j,k,} j = 0 ... N-1, k = 0 ... L - 1; depend on mirror-planes, as well as on the rotation and translation and K matrices that are used. Refinement of the mirror-planes is a search for the parameters of the planes and entries of R_{0,0}, T_{0,0} and K, which minimize the squared distance between V_{j,k} (obtained by current M'ᵢ, R'_{0,0}, T'_{0,0} and K' using procedure described in step 1.1) and U_{j,k}, i = 1 ... 3, j = 0 ... N-1, k = 0 ... L - 1;. The minimization could be performed by any minimization algorithm.
Output:
   1. Mirror-planes Mᵢ = (nᵢ,Tᵢ), where i = 1 ... 3.
   2. Rotation and translation matrices mentioned on the step 2.1.2 taken for the real checkerboard in the photo number 0, R_{0,0} and T_{0,0}.
   3. K matrix - a matrix of intrinsic parameters of the camera obtained on the first step.

Once the computational model of the mirroring setup has been captured, a multi-view image may be shot using the image sensing means. The image may be shot from the same location that was used to extract the mirroring setup's computational model, or from a different location, which will then be entered into said computational model. This situation is illustrated in Fig 6, wherein a further camera 335 having an optical lense 337 is provided. Several multi-view images may be taken from several viewpoints. For as long as the computational model of the mirroring setup remains correct, the above described algorithm will be able to label the generated views for each of the generated images.

### Radiometric calibration step

As the light intensity diminishes with each mirror reflection, it may be necessary to perform a radiometric calibration of the captured multi-view image. In order to perform this post-processing of the captured image, the pattern of intensity loss within the mirroring system may be evaluated in a further radiometric calibration step.

First the camera response is linearized by taking exposure sequences of, for example, 5 images and applying the technique of Robertson et al. as implemented in the PFSTools package. Then, high-dynamic range imaging of a Spectralon^{™} target is performed. The Spectralon^{™} is an almost perfect Lambertian reflector. During the capture of the HDR images, an area light source is positioned close to the proximal end of the tubular base chamber. Since the light source is mirrored in the same manner as the view point, a uniform incident light distribution on the Spectralon^{™} patch is obtained. The patch should thus appear uniform under different viewing directions. However, since the virtual views are generated by mirroring rays, the images are attenuated by the mirroring surfaces. To estimate the attenuation factor, image patches of the Spectralon^{™} target for virtual views with different reflection counts are extracted and the median colour value of the patches is computed. Ratios of values from viewpoints of different reflection counts then allow for the estimation of the attenuation coefficient. Using this procedure, the used mirrors were estimated to have 87% reflectivity, this value being in good agreement for all colour channels.

### Results

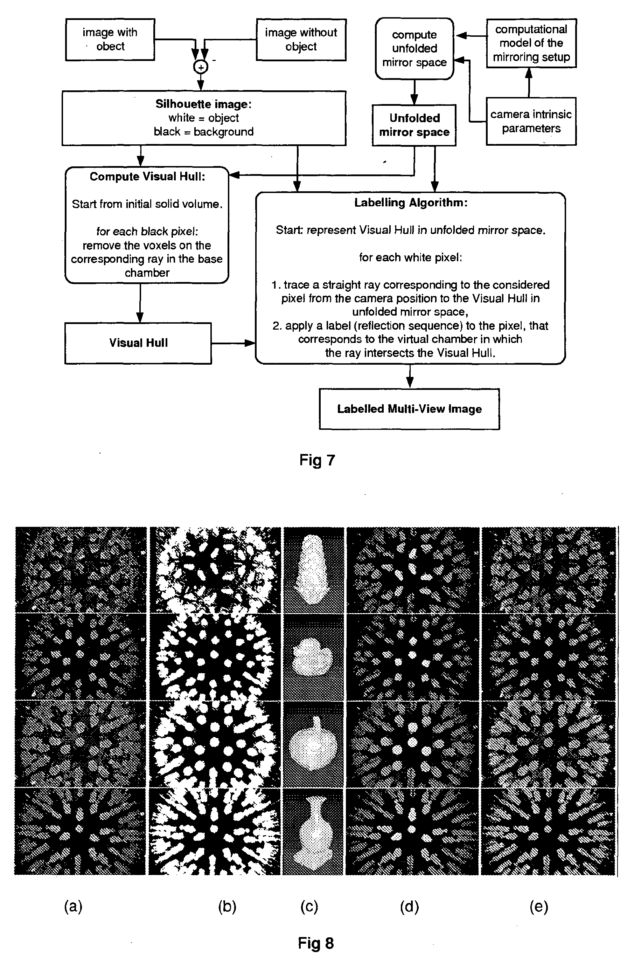

Fig 7 shows the results obtained by using the above preferred embodiment according to the present invention.

The data sets as well as the computed labelling and radiometrically corrected images are shown. Specifically Fig 7a shows the Input images, Fig 7b shows the computed silhouette images. Fig 7c shows the computed Visual Hulls of the pictured objects. Fig 7d shows the results of the labelling algorithm, where each label corresponds to a colour code, while Fig 7e shows the respective radiometrically corrected images. All results have been computed using only the silhouette images and the calibration information. The objects used for these result sets cover different sizes and vary drastically in silhouette quality. The results in the Fig 7 were computed using the information from 8 levels of reflection, equalling 166 views.

The dark streaks in the images are due to the safety region around mirror boundaries. As can be seen in the results, almost pixel-accurate labelling results are achieved: if errors occur, they are conservative, i.e. to the inside of the object, the labelling is thus still correct. Overlaps between virtual views can be well resolved.

### Description of a further preferred embodiment

In a further preferred embodiment, at least one projector comprising a lens may be provided. The projector's location and its optical lens define a field of projection. The projector is arranged so that at least one mirroring surface of the mirroring setup, and at least one view of the object is located in the field of projection.

The setup allows to project onto each point of the object that is visible from the projector's point of view. If the mirroring setup would not be present in the field of projection, a projection would only be possible onto the face of the object that is exposed to the projector. However, using the mirroring setup, each virtual chamber that is visible from the projector's position can be reached by the projector. Equivalently, the projector is able to project onto each point on the object that is visible from the projector's position, be it by following a direct ray or by following a mirroring sequence.

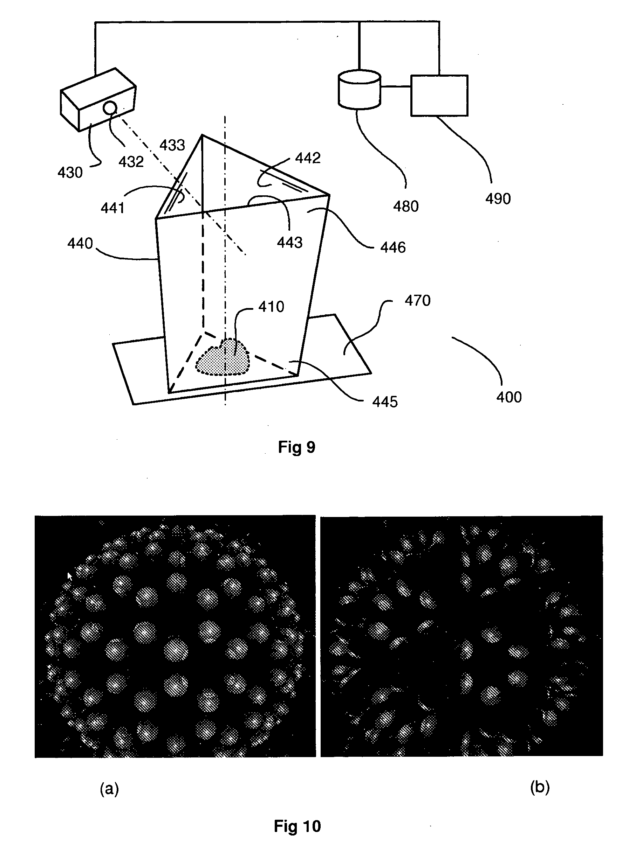

As illustrated in Fig 9, a preferred setup 400 includes a projector 430 having optical means 432 defining a field of projection 433. The projector is capable of selectively projecting stored image patterns. Preferably, the image data is stored on storage means 480, such as a hard disk, solid state memory or an other similar device. Computing means 490 are configured so that they can access the image data on the storage means 480. Moreover, the computing means are configured to compute the above described labelling algorithm based on the computational model of the mirroring setup 440, the projector parameters, and the object 410.

Without loss of generality, it is preferred that the mirroring system 440 comprises three planar mirrors 441, 442, 443, which are arranged so as to enclose a tubular space of triangular subsection. The tubular space defines the base chamber of the mirroring system. It is preferred that the proximal end 446 of the tubular space has a larger cross-section than its distal end 445.

The projection setup may further comprise undepicted imaging means as described above, that may be used to acquire data used in the extraction of the computational model of the mirroring setup.

The object 410 that is to be projected on using the multi-view setup 400 is entered into the base chamber through the distal aperture 445 of the base chamber, by use of object holding means forming a ground plane 470.

The above-described labelling algorithm allows to map a mirroring sequence to each point on the object 410 that is visible from the projector's 430 position. For a given point, this sequence corresponds to the sequence of mirror reflections that must be used to illuminate said given point on the object using the projector. Therefore the computed labelling determines the projection direction to be used to project onto a selected area of the object, which may or may not be directly exposed to the projector.

A detailed description of the different steps involved in the extraction of the computational model of the projector's parameters is given for the sake of completeness here below for the case of 3 planar mirrors.

### Projector calibration

### Step 1 Initial guess

Input: images of a calibration pattern projected on a plane whose position with respect to the camera is known.
Output: Rotation and translation matrices R and T, to convert a point given in the projector coordinate system to the camera coordinate system.
Note: To perform this step with reliable Output one must have at least 2 photos with different plane positions.

### Substep 1.1: Extracting Key points

Input: images of a calibration pattern projected on the plane with known position w.r.t. camera. N images and L key points per image are considered.
Note: Key points of the pattern are easily detectable features of the pattern, e.g. for a grid it is the intersections. This step can be performed by any software suitable for the used pattern.
Output: Two-dimensional coordinates of the extracted key points x_{i,j} given in camera image coordinates. i = 0 ... N-1, j = 0...L-1.

### Substep 1.2: Triangulating the points

Input:
   - Two-dimensional coordinates of the extracted key points x_{i,j} given in camera image coordinates. i = 0 ... N-1, j = 0... L-1.
   - Rotation Rᵢ and translation Tᵢ matrices to describe the position of the projection plane w.r.t. the camera. i = 0 ... N-1.
Perform: For every point x_{i,j} perform X_{i,j} = Rᵢ * x_{i,j} + Tᵢ. i = 0... N-1, j= 0... L-1.
Output: Three-dimensional coordinates of the key points X_{i,j} given in camera coordinate system. i = 0 ... N-1, j = 0... L-1;

### Substep 1.3 Estimating of the projector rotation matrix

Input: Three-dimensional coordinates of the key points X_{i,j} given in camera coordinate system. i = 0 ... N-1, j = 0...L-1;
Output: Rotation matrix R of the projector coordinate system w.r.t. the camera coordinate system.

### Substep 1.3.1: Selecting median points

Input: Three-dimensional coordinates of the key points X_{i,j} given in camera coordinate system. i = 0 ... N-1, j = 0... L-1;
Perform: Assuming K rows and M columns of points in every plane, obviously L=K*M. In every i^{th} plane the vertical median points are V_{i,m}, they are located in the row number ((K+1)/2). Horizontal median points are H_{i,k}, they are located in column number ((M+1)/2).
Output: Median points along vertical V_{i,m} and horizontal H_{i,k} axes,k = 0...K-1, m = 0... M-1, i = 0 ... N-1.

### Substep 1.3.2: Selecting optical axis points

Input: Median points along vertical V_{i,m} and horizontal H_{i,k} axes,k = 0 ... K-1, m = 0... M-1, i = 0 ... N-1.
Output: Oᵢ = V_{i,m} ∩ H_{i,k}, k = 0... K-1, m = 0... M-1, i = 0 ... N-1.

### Substep 1.3.3: Estimating the optical axis of the system

Input: Oᵢ = V_{i,m} ∩ H_{i,k}, k = 0... K-1, m = 0... M-1, i = 0 ... N-1.
Perform: The optical axis is a ray passing through median points common for both vertical and horizontal rotation axes. To compute it, a ray is fitted to the points in such a way that the sum of squared distances from the ray to Oᵢ is minimal. The direction-vector of the line is z̅. The origin of the ray is O₀. It is assumed that the optical axis coincides with the z axis of the coordinate system related to the projector. Thus, estimating the axis, one of the rotational degrees of freedom is fixed.
Output: z̅- direction vector of the optical axis. |z̅l = 1

### Substep 1.3.4: Fitting XOZ and YOZ planes

Input: Median points along vertical V_{i,m} and horizontal H_{i,k} axes, k = 0...K-1, m = 0... M-1, i = 0 ... N-1.
Perform: O₀ is considered as a point that belongs to both planes and the optical axis as the intersection of the planes. Both planes are fitted in such a way that the sum of squared distances from V_{i,m} or H_{i,k} corresponding to the plane is minimal for k = 0 ... K-1, m = 0 ... M-1, i = 0 ... N-1. Knowing the norms of the planes, two remaining rotational degrees of freedom are fixed. Thus, a rotation matrix R of the system is obtained.
Output: *̅n̅*̅₁, *̅n̅*̅₂ - norms of XOZ and YOZ planes in projector coordinate system, given in camera coordinate system. The optical axis is the intersection of both planes.

### Substep 1.4: Estimating the translation matrix

Input:
   1. *̅n̅*̅₁, *̅n̅*̅₂ - norms of XOZ and YOZ planes in the projector coordinate system.
   2. Three-dimensional coordinates of the key points X_{i,j} given in camera coordinate system. i = 0 ... N-1_{,} j = 0... L-1;
Output: Translation matrix T of the projector coordinate system with respect to the camera coordinate system.

### Substep 1.4.1: Projecting the points onto the XOZ and YOZ planes

Input:
   1. *̅n̅*̅₁̅, *̅n̅*̅₂ norms of XOZ and YOZ planes in the projector coordinate system.
   2. Three-dimensional coordinates of the key points X;,; given in the camera coordinate system. i = 0 ... N-1, j = 0...L-1;
Perform: In order to obtain P_{i,j}, every point X_{i,j} is projected onto the planes estimated during step 1.3.4. The projections are x and y coordinates of the points X_{i,j} given w.r.t. the projector coordinate system.
Output: Two-dimensional vector of projections P_{i,j}. i = 0 ... N-1, j = 0 ... L-1;

### Substep 1.4.2: Computing the z-coordinate

Input: Two-dimensional vector of projections P_{i,j}. i = 0 ... N-1, j = 0 ... L-1;
Perform: This step is performed according to the projector model that is used. The z-coordinate is computed according to the projection system and the model one uses.
Output: Z-coordinate z_{i,j} given in projector coordinate system for every key point, i = 0... N-1, j = 0...L-1;

### Substep 1.4.3: Computing the translation matrix

Input:
   1. Three-dimensional coordinates of the key points X_{i,j} given in the camera coordinate system. i = 0 ... N-1, j = 0... L-1;
   2. Three-dimensional coordinates of the key points Q_{i,j} given the projector coordinate system. i = 0 ... N-1, j = 0 ... L-1;
Perform: Translation matrix T = X_{i,j} - R*Q_{i,j}.
Output: Translation matrix T of the projector coordinate system with respect to the camera coordinate system.

### Step 2: Refinement

Input:
   1. Rotation R and translation T matrices to convert coordinates from the projector to the camera coordinate system.
   2. Computational model of the mirroring system, namely camera internal parameters K, relative positions of the camera and the mirrors (Mirror-planes Mᵢ, where I = 1 ... 3) as well as the rotation R_{c} and translation T_{c} matrices, defining conversion between coordinate system related to the real checkerboard closest to the bottom side of the mirrors and the camera coordinate system.
Output: Refined R and T matrices to convert coordinates from the projector to the camera coordinate system.

### Substep 2.1: Collecting the refinement data

Input: Computational model of the mirroring system, namely camera internal parameters K, relative positions of the camera and the mirrors (Mirror-planes Mᵢ, where I = 1 ... 3) as well as the rotation R_{c} and translation T_{c} matrices, defining conversion between coordinate system related to the real checkerboard closest to the bottom side of the mirrors and the camera coordinate system.
Perform:
   1. A point S_{obj} on the object inside of the mirroring system is chosen, which should be highlighted by the projector.
   2. Conversion of the coordinates of S to the camera coordinate system S = R_{c} *S_{obj} + T_{c};
   3. Generation of the coordinates of the reflections of S.
      3.1. Generation of reflection matrices Dₗ using mirror planes Mₗ where I = 1 ... 3.
      3.2. Multiplying S with matrices Dₗ generate the reflections Sᵢ of S given in the camera coordinate system. i = 0 ... M-1. Assuming that one generated M reflections and So = S.
   4. Conversion of each point Sᵢ to the projector coordinate system. Pᵢ= R^{-1*}(S¡-T), i=0... M-1
   5. Conversion of each point Pᵢ to two-dimensional projector image coordinates uᵢ, i = 0 ... M-1. The Projector image coordinates are the coordinates which define the direction of the outgoing ray. The conversion is performed according to the model, which describes the system.
   6. For every uᵢ an image of the object inside of the system with highlighted point, i = 0 ... M-1 is taken
Output: Images of the object inside of the mirroring system, with one point highlighted by the projector but in different chambers.

### Substep 2.2: Extracting hit-points

Input: M images of the object inside of the mirroring system, with one point highlighted by the projector but in different chambers.
Perform: For every i^{th} photo perform the detection only in the chamber where you highlighted the point.
Output: Coordinates of the highlighted points vᵢ, 0 ... M-1

### Substep 2.3: Generating expected points

Input:
   1. Two-dimensional projector image coordinates uᵢ, i = 0 ... M-1
   2. Rotation R and translation T matrices to convert a point given in the coordinate system related to the camera to the projector coordinate system.
   3. Camera internal parameters K.
Perform: Expected points are the points one expects to appear on the photo, when highlighting the object using uᵢ. To generate them, the uᵢ are converted to three-dimensional projector coordinates lᵢ using the mode that describes the projector. For every lᵢ the conversion to the camera coordinate system is performed as follows l^{c}ᵢ = R* lᵢ + T, i = 0 ... M-1. The l^{c}ᵢ are converted to image coordinates bᵢ = K*l^{c}ᵢ, gᵢ = bᵢ/b^{z}ᵢ, i = 0 ... M-1. An upper index denotes the component of the vector.
Output: Camera image coordinates gᵢ for every uᵢ, i = 0 ... M-1.

### Substep 2.4: Optimization

Input:
   1. Coordinates of the highlighted points vᵢ, 0 ... M-1
   2. Camera image coordinates gᵢ for every uᵢ, i = 0 ... M-1.
   3. Camera internal parameters K.
   4. Rotation R and translation T matrices to convert a point given in the coordinate system related to the camera to the projector coordinate system.
Perform: Refinement is a search for such parameters R and T that the squared distance between the hit-points vᵢ and expected points gᵢ, generated using step 2.3 is minimal. This task can be performed by any optimizer.
Output Refined R and T matrices to convert coordinates from the projector to the camera coordinate system.

### Results

Fig 10 shows the results obtained by using the above preferred embodiment comprising a projector according to the present invention. A camera and a projector have been arranged coaxially with the main axis of the tubular mirroring setup. Two different virtual chambers have been illuminated using the projector in Fig 10(a) and (b) respectively, by using two different projection directions. As illustrated, the method and device according to the present invention allow to selectively project a pattern onto different faces of a three-dimensional object using at least one projection source.

It should be understood that the detailed description of specific preferred embodiments is given by way of illustration only, since various changes and modifications within the scope of the invention will be apparent to the skilled man. The scope of protection is defined by the following set of claims.

## Claims

1. A method of mapping each one of a plurality of pixels in a single (001) image to one of multiple views of an object (010) in the image, the image being taken by image sensing means (030), the image sensing means comprising at least one sensor element (031) capable of recording a plurality of image pixels and optical means (032) defining a field of view (033), wherein said field of view comprises a mirroring system (040) having one or more mirrors, each mirror providing a reflection of the object, each reflection corresponding to a virtual view of the object, the method comprising the steps of:
a. providing (1000) parameters that are related to the image sensing means (030);
b. providing (1001) a computational model of the mirroring system (040); **characterised in that** the method further comprises:
c. providing (1002) a computational model of the object's (010) three dimensional characteristics;
d. computing (1003), for each image pixel, a mirroring sequence for said computational model, the mirroring sequence comprising an ordered M-tuple describing a sequence of said mirrors reflecting a ray (051), having an origin at the position of the sensor element (031) that captured said image pixel and intersecting the object (010); and
e. using the computed mirroring sequence to map each image pixel to a virtual view or to a base chamber, wherein the base chamber corresponds to a ray originating in a non-mirrored scene.

2. The method according to claim 1, wherein the method is adapted to an image taken by image sensing means, which comprise a plurality of sensor elements arranged in two dimensions.

3. The method according to any of claims 1 and 2, wherein the method is adapted to a mirroring system comprising at least one planar mirroring surface.

4. The method according to any of the preceding claims, wherein the computational model of the mirroring system (040) is computed from at least one provided reference image of a reference object in said field of view (033), said reference image comprising at least one virtual view of the reference object.

5. The method according to claim 4, wherein the computation of the computational model of the mirroring system comprises the steps of
- estimating the parameters describing the geometry of the mirrors in a coordinate system related to the image sensing means;
- estimating the parameters describing the geometry of the mirrors in a coordinate system related to the reference object;
- estimating rotation and translation matrices for converting coordinates between the coordinate system related to the image sensor and the coordinate system related to the reference object.

6. The method according to claim 5, wherein the representations of first order reflections of said reference object in said at least one reference image are used in said computations.

7. The method according to any of claims 5 to 6, wherein the representations of higher order reflections of said reference object in said at least one reference image are used in said computations.

8. The method according to any of the preceding claims, wherein the computational model of the object's three-dimensional characteristics is computed from at least one provided silhouette image of said object.

9. The method according to claim 8, wherein the method of computing said computational model of the object's three-dimensional characteristics further comprises the steps of
- computing, based on the provided computational model of the mirroring system, for each image pixel representing background information in said silhouette image, the mirroring sequence in said computational model for said silhouette image pixel,
- using the computed mirroring sequence to estimate the hull that comprises the object.

10. The method according to any preceding claim further comprising identifying a projection direction to be used by a projecting means (430) for projecting a light beam onto an object (410), the projecting means comprising optical means (432) defining a field of projection (433), wherein said field of projection comprises a mirroring system (440) having at least one mirror,
the method comprising the steps of
a. providing (2000) parameters that are related to the projecting means;
b. using the computed mirroring sequence to map each point in the field of projection to a projection direction, wherein each mirroring sequence corresponds to a projection direction (2004).

11. A device for carrying out the method according to any of claims 1 to 9 comprising image sensing means, the image sensing means comprising at least one sensor element capable of recording a plurality of image pixels and optical means defining a field of view, the device comprising
a mirroring system having at least one mirror, the mirror system being arranged to be located in said field of view;
the device further comprising computing means capable of
a. providing a computational model of the mirroring system;
b. providing the relative position of the image sensing means with respect to the mirroring system;
c. providing a computational model of the object's three dimensional characteristics;
d. computing, based on the provided computational model, for each image pixel, the mirroring sequence in said computational model for said image pixel; and
e. using the computed mirroring sequences to map each image pixel to a virtual view, as each mirroring sequence corresponds to a virtual view.

12. A device for carrying out the method according to claim 10 comprising projecting means (430) having optical means (432) defining a field of projection (433), the device comprising a mirroring system (410) having at least one mirror, the mirror system being arranged to be located in said field of projection, the device further comprising computing means capable of:
a. providing a computational model of the mirroring system;
b. providing the relative position of the projecting means with respect to the mirroring system;
c. providing a computational model of the object's three dimensional characteristics;
d. computing the mirroring sequence; and
e. using the computed mirroring sequence to map each point in the field of projection to a projection direction, wherein the mirroring sequence corresponds to a projection direction.

13. A computer capable of carrying out the method according to any of claims 1 to 10.

14. A computer program comprising computer readable code means, which when run on a computer, causes the computer to carry out the method according to any of claims 1 to 10.

15. A computer program product comprising a computer-readable medium on which the computer program according to claim 14 is stored.

## Patentansprüche

1. Verfahren zum Zuordnen jedes einer Mehrzahl von Pixeln in einem einzelnen (001) Bild zu einer von mehreren Ansichten eines Objekts (010) im Bild, wobei das Bild durch ein Bildsensormittel (030) aufgenommen wird, wobei das Bildsensormittel mindestens ein Sensorelement (031), das zum Aufzeichnen einer Mehrzahl von Bildpixeln imstande ist, und ein optisches Mittel (032) umfasst, das ein Blickfeld (033) definiert, wobei das Blickfeld ein Spiegelungssystem (040) mit einem oder mehreren Spiegeln umfasst, wobei jeder Spiegel eine Reflexion des Objekts bereitstellt, wobei jede Reflexion einer virtuellen Ansicht des Objekts entspricht, wobei das Verfahren die folgenden Schritte umfasst:
a. Bereitstellen (1000) von Parametern, die mit dem Bildsensormittel (030) in Zusammenhang stehen;
b. Bereitstellen (1001) eines Rechenmodells des Spiegelungssystems (040);
**dadurch gekennzeichnet, dass** das Verfahren ferner umfasst:
c. Bereitstellen (1002) eines Rechenmodells der dreidimensionalen Charakteristiken des Objekts (010);
d. Berechnen (1003) für jedes Bildpixel einer Spiegelungsfolge für das Rechenmodell, wobei die Spiegelungsfolge ein geordnetes M-Tupel umfasst, das eine Folge der Spiegel beschreibt, die einen Strahl (051) reflektieren, der seinen Ursprung an der Position des Sensorelements (031) hat, welches das Bildpixel erfasste, und das Objekt (010) schneidet; und
e. Verwenden der berechneten Spiegelungsfolge zum Zuordnen jedes Bildpixels zu einer virtuellen Ansicht oder zu einer Basiskammer, wobei die Basiskammer einem Strahl entspricht, der in einer nicht gespiegelten Szene entspringt.

2. Verfahren nach Anspruch 1, wobei das Verfahren für ein Bild geeignet ist, das durch Bildsensorelemente aufgenommen wird, welche eine Mehrzahl von Sensorelementen umfassen, die in zwei Dimensionen angeordnet sind.

3. Verfahren nach einem der Ansprüche 1 und 2, wobei das Verfahren ferner für ein Spiegelungssystem geeignet ist, das mindestens eine planare Spiegelungsfläche umfasst.

4. Verfahren nach einem der vorhergehenden Ansprüche, wobei das Rechenmodell des Spiegelungssystems (040) aus mindestens einem bereitgestellten Bezugsbild eines Bezugsobjekts im Blickfeld (033) berechnet wird, wobei das Bezugsbild mindestens eine virtuelle Ansicht des Bezugsobjekts umfasst.

5. Verfahren nach Anspruch 4, wobei die Berechnung des Rechenmodells des Spiegelungssystems die folgenden Schritte umfasst:
- Schätzen der Parameter, welche die Geometrie der Spiegel in einem Koordinatensystem in Bezug auf das Bildsensormittel beschreiben;
- Schätzen der Parameter, welche die Geometrie der Spiegel in einem Koordinatensystem in Bezug auf das Bezugsobjekt beschreiben;
- Schätzen der Rotations- und Translationsmatrizen zum Umwandeln von Koordinaten zwischen dem Koordinatensystem in Bezug auf den Bildsensor und dem Koordinatensystem in Bezug auf das Bezugsobjekt.

6. Verfahren nach Anspruch 5, wobei die Darstellungen der Reflexionen erster Ordnung des Bezugsobjekts in dem mindestens einen Bezugsbild in den Berechnungen verwendet werden.

7. Verfahren nach einem der Ansprüche 5 bis 6, wobei die Darstellungen der Reflexionen höherer Ordnung des Bezugsobjekts in dem mindestens einen Bezugsbild in den Berechnungen verwendet werden.

8. Verfahren nach einem der vorhergehenden Ansprüche, wobei das Rechenmodell der dreidimensionalen Charakteristiken des Objekts aus mindestens einem bereitgestellten Silhouettenbild des Objekts berechnet wird.

9. Verfahren nach Anspruch 8, wobei das Verfahren zum Berechnen des Rechenmodells der dreidimensionalen Charakteristiken des Objekts ferner die folgenden Schritte umfasst:
- Berechnen basierend auf dem bereitgestellten Rechenmodell des Spiegelungssystems für jedes Bildpixel, das Hintergrundinformationen im Silhouettenbild darstellt, der Spiegelungsfolge im Rechenmodell für das Silhouettenbildpixel,
- Verwenden der berechneten Spiegelungsfolge zum Schätzen der Hülle, die das Objekt umfasst.

10. Verfahren nach einem der vorhergehenden Ansprüche, ferner umfassend ein Identifizieren einer Projektionsrichtung, die durch ein Projektionsmittel (430) zum Projizieren eines Lichtstrahls auf ein Objekt (410) verwendet werden soll, wobei das Projektionsmittel ein optisches Mittel (432) umfasst, das ein Projektionsfeld (433) definiert, wobei das Projektionsfeld ein Spiegelungssystem (440) mit mindestens einem Spiegel umfasst,
wobei das Verfahren die folgenden Schritte umfasst:
a. Bereitstellen (2000) von Parametern, die mit dem Projektionsmittel in Zusammenhang stehen;
b. Verwenden der berechneten Spiegelungsfolge zum Zuordnen jedes Punktes im Projektionsfeld zu einer Projektionsrichtung, wobei jede Spiegelungsfolge einer Projektionsrichtung (2004) entspricht.

11. Vorrichtung zum Ausführen des Verfahrens nach einem der Ansprüche 1 bis 9, umfassend ein Bildsensormittel, wobei das Bildsensormittel mindestens ein Sensorelement, das zum Aufzeichnen einer Mehrzahl von Bildpixeln imstande ist, und ein optisches Mittel umfasst, das ein Blickfeld definiert, wobei die Vorrichtung umfasst:
ein Spiegelungssystem mit mindestens einem Spiegel, wobei das Spiegelsystem, so angeordnet ist, dass es sich im Blickfeld befindet;
wobei die Vorrichtung ferner ein Rechenmittel umfasst, das imstande ist zum:
a. Bereitstellen eines Rechenmodells des Spiegelungssystems;
b. Bereitstellen der relativen Position des Bildsensormittels in Bezug auf das Spiegelungssystem;
c. Bereitstellen eines Rechenmodells der dreidimensionalen Charakteristiken des Objekts;
d. Berechnen, basierend auf dem bereitgestellten Rechenmodell, für jedes Bildpixel, die Spiegelungsfolge im Rechenmodell für das Bildpixel; und
e. Verwenden der berechneten Spiegelungsfolgen zum Zuordnen jedes Bildpixels zu einer virtuellen Ansicht, wenn jede Spiegelungsfolge einer virtuellen Ansicht entspricht.

12. Vorrichtung zum Ausführen des Verfahrens nach Anspruch 10, umfassend ein Projektionsmittel (430) mit einem optischen Mittel (432), das ein Projektionsfeld (433) definiert, wobei die Vorrichtung ein Spiegelungssystem (410) mit mindestens einem Spiegel umfasst, wobei das Spiegelsystem so angeordnet ist, dass es sich im Projektionsfeld befindet, wobei die Vorrichtung ferner ein Rechenmittel umfasst, das imstande ist zum:
a. Bereitstellen eines Rechenmodells des Spiegelungssystems;
b. Bereitstellen der relativen Position des Projektionsmittels in Bezug auf das Spiegelungssystem;
c. Bereitstellen eines Rechenmodells der dreidimensionalen Charakteristiken des Objekts;
d. Berechnen der Spiegelungsfolge; und
e. Verwenden der berechneten Spiegelungsfolge zum Zuordnen jedes Punktes im Projektionsfeld zu einer Projektionsrichtung, wobei die Spiegelungsfolge einer Projektionsrichtung entspricht.

13. Computer, der zum Ausführen des Verfahrens nach einem der Ansprüche 1 bis 10 imstande ist.

14. Computerprogramm, umfassend ein computerlesbares Codemittel, welches, wenn es auf einem Computer ausgeführt wird, den Computer veranlasst, das Verfahren nach einem der Ansprüche 1 bis 10 auszuführen.

15. Computerprogrammprodukt, umfassend ein computerlesbares Medium, auf welchem das Computerprogramm nach Anspruch 14 gespeichert ist.

## Revendications

1. Procédé de mise en correspondance de chaque pixel d'une pluralité de pixels d'une image unique (001) avec une parmi plusieurs vues d'un objet (010) de l'image, l'image étant prise par un moyen de capture d'image (030), le moyen de capture d'image comprenant au moins un élément de capture (031) capable d'enregistrer une pluralité de pixels d'image et un moyen optique (032) définissant un champ de vision (033), ledit champ de vision comprenant un système de miroirs (040) présentant un ou plusieurs miroirs, chaque miroir fournissant un reflet de l'objet, chaque reflet correspondant à une vue virtuelle de l'objet, le procédé comprenant les étapes consistant à :
a. fournir (1000) des paramètres qui sont liés au moyen de capture d'image (030) ;
b. fournir (1001) un modèle computationnel du système de miroirs (040) ;
**caractérisé en ce que** le procédé comprend en outre les étapes consistant à :
c. fournir (1002) un modèle computationnel des caractéristiques tridimensionnelles de l'objet (010) ;
d. calculer (1003), pour chaque pixel d'image, une séquence de miroirs pour ledit modèle computationnel, la séquence de miroirs comprenant un M-tuple ordonné décrivant une séquence desdits miroirs réfléchissant un rayon (051), ayant son origine au niveau de la position de l'élément de capture (031) qui a capturé ledit pixel d'image et intersectant l'objet (010) ; et
e. utiliser la séquence de miroirs calculée pour mettre en correspondance chaque pixel d'image avec une vue virtuelle ou un compartiment de base, le compartiment de base correspondant à un rayon ayant son origine dans une scène non réfléchie par des miroirs.

2. Procédé selon la revendication 1, dans lequel le procédé est adapté à une image prise par un moyen de capture d'image comprenant une pluralité d'éléments de capture agencés dans deux dimensions.

3. Procédé selon l'une quelconque des revendications 1 et 2, dans lequel le procédé est adapté à un système de miroirs comprenant au moins une surface de miroir plane.

4. Procédé selon l'une quelconque des revendications précédentes, dans lequel le modèle computationnel du système de miroirs (040) est calculé à partir d'au moins une image de référence fournie d'un objet de référence dans ledit champ de vision (033), ladite image de référence comprenant au moins une vue virtuelle de l'objet de référence.

5. Procédé selon la revendication 4, dans lequel le calcul du modèle computationnel du système de miroirs comprend les étapes consistant à
- estimer les paramètres décrivant la géométrie des miroirs dans un système de coordonnées lié au moyen de capture d'image ;
- estimer les paramètres décrivant la géométrie des miroirs dans un système de coordonnées lié à l'objet de référence ;
- estimer des matrices de rotation et de translation pour convertir des coordonnées entre le système de coordonnées lié au capteur d'image et le système de coordonnées lié à l'objet de référence.

6. Procédé selon la revendication 5, dans lequel les représentations de reflets de premier ordre dudit objet de référence dans ladite au moins une image de référence sont utilisées dans lesdits calculs.

7. Procédé selon la revendication 5 ou 6, dans lequel les représentations de reflets d'un ordre supérieur dudit objet de référence dans ladite au moins une image de référence sont utilisées dans lesdits calculs.

8. Procédé selon l'une quelconque des revendications précédentes, dans lequel le modèle computationnel des caractéristiques tridimensionnelles de l'objet est calculé à partir d'au moins une image de silhouette fournie dudit objet.

9. Procédé selon la revendication 8, dans lequel le procédé de calcul dudit modèle computationnel des caractéristiques tridimensionnelles de l'objet comprend en outre les étapes consistant à
- calculer, sur la base du modèle computationnel fourni du système de miroirs, pour chaque pixel d'image représentant des informations d'arrière-plan dans ladite image de silhouette, la séquence de miroirs dans ledit modèle computationnel pour ledit pixel d'image de silhouette,
- utiliser la séquence de miroirs calculée pour estimer l'enveloppe qui comprend l'objet.

10. Procédé selon l'une quelconque des revendications précédentes, comprenant en outre l'étape consistant à identifier une direction de projection à utiliser par un moyen de projection (430) pour projeter un faisceau lumineux sur un objet (410), le moyen de projection comprenant un moyen optique (432) définissant un champ de projection (433), ledit champ de projection comprenant un système de miroirs (440) présentant au moins un miroir,
le procédé comprenant les étapes consistant à
a. fournir (2000) des paramètres qui sont liés au moyen de projection ;
b. utiliser la séquence de miroirs calculée pour mettre en correspondance chaque point du champ de projection avec une direction de projection, chaque séquence de miroirs correspondant à une direction de projection (2004).

11. Dispositif pour mettre en oeuvre le procédé selon l'une quelconque des revendications 1 à 9, comprenant un moyen de capture d'image, le moyen de capture d'image comprenant au moins un élément de capture capable d'enregistrer une pluralité de pixels d'image et un moyen optique définissant un champ de vision, le dispositif comprenant
un système de miroirs présentant au moins un miroir, le système de miroirs étant agencé de manière à être situé dans ledit champ de vision ;
le dispositif comprenant en outre un moyen de calcul capable de
a. fournir un modèle computationnel du système de miroirs ;
b. fournir la position relative du moyen de capture d'image par rapport au système de miroirs ;
c. fournir un modèle computationnel des caractéristiques tridimensionnelles de l' obj et ;
d. calculer, sur la base du modèle computationnel fourni, pour chaque pixel d'image, la séquence de miroirs dans ledit modèle computationnel pour ledit pixel d' image ; et
e. utiliser les séquences de miroirs calculées pour mettre en correspondance chaque pixel d'image avec une vue virtuelle, dans la mesure où chaque séquence de miroirs correspond à une vue virtuelle.

12. Dispositif pour mettre en oeuvre le procédé selon la revendication 10, comprenant un moyen de projection (430) présentant un moyen optique (432) définissant un champ de projection (433), le dispositif comprenant un système de miroirs (410) présentant au moins un miroir, le système de miroirs étant agencé de manière à être situé dans ledit champ de projection, le dispositif comprenant en outre un moyen de calcul capable de :
a. fournir un modèle computationnel du système de miroirs ;
b. fournir la position relative du moyen de projection par rapport au système de miroirs ;
c. fournir un modèle computationnel des caractéristiques tridimensionnelles de l' obj et ;
d. calculer la séquence de miroirs ; et
e. utiliser la séquence de miroirs calculée pour mettre en correspondance chaque point du champ de projection avec une direction de projection, la séquence de miroirs correspondant à une direction de projection.

13. Ordinateur capable de mettre en oeuvre le procédé selon l'une quelconque des revendications 1 à 10.

14. Programme informatique comprenant un moyen de codage pouvant être lu par un ordinateur, qui, lorsqu'il fonctionne sur un ordinateur, amène l'ordinateur à mettre en oeuvre le procédé selon l'une quelconque des revendications 1 à 10.

15. Produit programme informatique comprenant un support pouvant être lu par un ordinateur sur lequel est stocké le programme informatique selon la revendication 14.
